# EUROPEAN PATENT APPLICATION

(11) **EP 3 943 237 A1**
(43) Date of publication of application: **26.01.2022**
(21) Application number: 21184756.1
(22) Date of filing: 09.07.2021
(51) Int. Cl.: B23Q 5/04, B23Q 17/00

(54) **MACHINE FOR WORKING WOODEN WORKPIECES AND THE LIKE, PROVIDED WITH A SYSTEM FOR RECOGNIZING TOOLS AND SYSTEM FOR RECOGNIZING TOOLS**

(30) Priority: 20.07.2020 IT 202000017536
(71) Applicant: SCM Group S.p.A., 47921 Rimini (RN) (IT)
(72) Inventor: LATELLA, Antonio, 47921 RIMINI (IT)
(74) Representative: Tiburzi, Andrea

(57) **Abstract**

The present invention relates to a machine (M) for working workpieces made of wood, plastic, metal, fiberglass, glass and ceramic, comprising a logic control unit (U) in which at least one predefined program for working said workpieces is stored, at least one working head (3) to which a spindle (31) for executing the program for working said workpieces is coupled, at least one tool holder (32), to which one respective tool (33) for working said workpieces can be coupled, and said at least one tool holder (32) being coupled to said spindle in a removable way (31), said at least one tool holder (32) being provided with at least one storage and identification mean (5) comprising information relating to said respective tool (33), said machine (M) comprising a reading and/or writing device (6) of said information comprised in said at least one storage and identification mean (5), arranged coupled to said spindle (31) by means of a supporting structure (34) so as to surround at least partially said tool holder (32), and said writing and/or reading device (6) being operationally connected to said logic control unit (U), so as to send said information to said logic control unit (U).

The present invention also relates to a system for recognizing tools and a relative operating method of the machine.

## Description

The present invention relates to a machine for working wooden workpieces and the like, provided with a system for recognizing tools, in particular with a numerical controlled automatic machine.

The present invention also relates to a system for recognizing tools, that can be installed on said machine.

### Field of the invention

More specifically, the invention relates to a numerical controlled machines for working workpieces made of wood, plastic, metal, fiberglass, glass, ceramic, and the like, of the said type, provided with a system for recognizing tools, designed and manufactured in particular to identify and map tools, housed in tool magazines and provided with respective identification means, in particular with a tag, but which can be used for any application, where it is necessary to identify tools.

In the following, the description will be addressed to a system for the identification, recognition, and the mapping of tools, by means of an RFID tag ("Radio Frequency IDentification"), but it is clear that it should not be considered limited to this specific use and this specific identification means.

### Prior art

As is well known, automatic numerical controlled machines for working wooden workpieces and the like substantially comprise a logic control unit, for the operation of the machine itself, a work surface, for supporting and fixing workpieces, and a mobile carriage, which can translate on said work surface, or can be stationary in one position.

The work surface develops from one end to the opposite end of the machine, according to a development direction X, which is, therefore, also the translation direction of the mobile carriage.

The mobile carriage supports one or more working heads of the moving pieces, generally according to three movement axes X, Y, Z, in some cases also according to five movement axes.

In particular, each working head is provided with a spindle, to which a specific tool holder is coupled with, on a first end, according to the working to be performed.

Each tool holder, in turn, is coupled, on a second end, opposite to the first one, with a specific tool for the working to be performed on the workpiece.

The coupling between the tool holder and the tool is unique and is stored in the memory of the logic control unit of the machine.

The tool holder and tool pair are manually and randomly loaded by an operator in a magazine located on the machine, before starting the working.

Over the years, different tools identification ways have been developed, in particular, as is well known, in recent decades there has been a progressive development of identification systems intended to identify, in particular, devices and objects, based on the transceiving of radio frequency signals.

RFID technology is one of the most used technical solutions. In particular, RFID technology allows obtaining information by means of a system made of at least one RFID tag or transponder and a reader that can be configured to read the data contained in the RFID tag and/or to write data on said RFID tag.

Both the RFID tag and the reader are provided with a respective antenna to allow radio frequency communication between the RFID tag and the reader.

Currently, in known machines, each tool holder can be provided with identification means for allowing the definition of the coupling with the spindle, based on the work program to execute.

In particular, each tool holder is provided with an RFID tag, arranged on the external circumference of the tool holder, and comprising identification data of the respective tool holder.

In the tool mapping step, an identification system, usually pneumatically operated, detects the identification data in the RFID tag, before the tool holder is coupled with the spindle, and sends them to the logic control unit of the machine, so that the exact position inside a magazine of the tool holder, necessary for the working to be performed, is known.

However, it is clear that this procedure is expensive in terms of the time it takes for each RFID tag of each tool holder to be read.

A further disadvantage, associated with known machines, relates to the fact that it is not possible to check whether the tool holder identified for working is actually coupled with the spindle of the working head to be used, thus causing problems relating to the safety of the working of the workpiece.

In fact, if a tool holder and, therefore, an incorrect tool were coupled with a spindle to be used for specific machining, for which the wrong tool is not suitable, the workpiece would undergo permanent damage, with a possible consequent injury even to operators placed near the wrong tool.

Additionally, a further disadvantage of such known machines is that they do not allow performing a reading and/or writing of the data in a dynamic way, or with the rotating or operating tool. Therefore, the time required to identify the tool and verify the correct coupling with the respective tool holder increases.

Finally, another disadvantage of such known machines consists in the fact that they do not allow performing an update of the variable data of the tool, including, for example, the tool working hours or the variation of the dimensional parameters after a sharpening operation.

### Scope of the invention

In the light of the above, it is, therefore, a scope of the present invention to make a machine for working wooden workpieces and the like, provided with a system for recognizing tools, which is able to identify the different tools loaded in the magazines of the machine, checking, in particular, that a tool holder and a respective tool are correctly coupled with each other.

Another scope of the invention is to provide a system for recognizing tools, which allows to store and update the information, relating to each tool for working the workpieces, in a very short time.

Another scope of the invention is to provide a system for recognizing tools that is highly reliable, relatively simple to manufacture, and at competitive costs if compared with the prior art.

Still, another scope of the present invention is to provide a machine in which the identification time of the tools in the magazines is masked by the magazine tooling time.

### Object of the invention

It is, therefore, specific object of the present invention a machine for working workpieces made of wood, plastic, metal, fiberglass, glass and ceramic, comprising a logic control unit in which at least one predefined program for working said workpieces is stored, at least one working head to which a spindle for executing the program for working said workpieces is coupled, at least one tool holder, to which one respective tool for working said workpieces can be coupled, and said at least one tool holder being coupled to said spindle in a removable way, said at least one tool holder being provided with at least one storage and identification mean comprising information relating to said respective tool, wherein said machine comprises a reading and/or writing device of said information comprised in said at least one storage and identification mean, arranged coupled to said spindle by means of a supporting structure so as to surround at least partially said tool holder, and wherein said writing and/or reading device is operationally connected to said logic control unit, so as to send said information to said logic control unit.

Advantageously according to the invention, said at least one tool holder may comprise a central body provided with a first end which can be coupled to said spindle, and a second end, opposite to said first end, and which can be coupled to said respective tool, and said supporting structure may comprise a main body and a rod having a first end connected to said main body and a second end, opposite to said first end, connected to said spindle, in which said main body has a substantially arc of a circle shape so as to surround at least partially said central body of said at least one tool holder.

Still according to the invention, said supporting structure may extend for an angle comprised between 5° and 360°, in particular between 90° and 360°, preferably an angle of 180°.

Always according to the invention, said at least one storage and identification mean may be univocally associated to said respective tool, and said at least one storage and identification mean may be capable of storing one or more geometric parameters and/or one or more cutting parameters and/or time of use, critical speeds, dimensions, wear, maintenance data of said tool, and/or information such as the correct coupling between tool and tool holder, and/or the correct tool with respect to the selected working program.

Conveniently according to the invention, said reading and/or writing device may be arranged on said main body, of said supporting structure, and said storage and identification means may be arranged on said main body of said at least one tool holder or in said central body of said at least one tool holder.

Still according to the invention, said machine may comprise a processing unit, operationally connected to said logic control unit and to said reading and writing device, for exchanging said information relating to said tool.

Advantageously according to the invention, said reading and/or writing device may be an RFID reader provided with a respective antenna, said storage and identification mean may be a tag or a RFID transponder provided with a respective antenna of punctiform type.

Further according to the invention, said spindle may comprise a respective flange, and said supporting structure may be integrated in said flange and it may be capable of moving from a first position, in which said supporting structure is retracted with respect to said flange, to a second position, different from said first position, in which said supporting structure is extracted with respect to said flange.

It is further object of the present invention, a system for recognizing tools, which can be coupled to a machine for working workpieces made of wood, plastic, metal, fiberglass, glass and ceramic of the type comprising a logic control unit in which at least one predetermined program for working said workpieces is stored, at least one working head to which said spindle for executing the program for working said workpieces is coupled, and at least one tool holder, to which a respective tool for working said workpieces can be coupled, wherein said at least one tool holder is coupled to said spindle, wherein said system comprises at least one storage and identification mean of said respective tool installable on said at least one tool holder and comprising information relating to the respective tool, a reading and/or writing device, installable on said spindle and capable of reading and/or writing said information in said at least one storage and identification mean, and a processing unit, operationally connected to said logic control unit and to said reading and/or writing device, for exchanging information relating to said tool, said system being characterized in that said reading and/or writing device of said information comprised in said at least one storage and identification mean is arranged coupled to said spindle by means of a supporting structure so as to at least partially surround said tool holder.

### Brief description of the figures

The present invention will be now described, for illustrative but not limitative purposes, according to its preferred embodiments, with particular reference to the figures of the enclosed drawings, wherein:
figure 1 shows a schematic top view of a machine for working wooden workpieces and the like, provided with a system for recognizing tools, object of the present invention;
figure 2 shows a schematic view of the system for recognizing tools, object of the present invention;
figure 3A shows a side perspective view of the spindle, to which a tool holder is coupled, on which the recognizing system object of the present invention is applied;
figure 3B shows a front view of the spindle shown in figure 3A;
figure 4A shows a front perspective view of the tool holder coupled with the spindle covered by a carter, on which the recognizing system, according to the present invention is installed;
figure 4B shows a front perspective view with a detail of the tool holder, partially in section, coupled with the spindle shown in figure 3A;
figure 4C shows a front view with a detail of the tool holder, partially in section, coupled with the spindle shown in figure 4A;
figure 5A shows a perspective view of a particular of figure 4A;
figure 5B shows a partially sectional view of a particular of figure 4B;
figure 5C shows a front view of the particular of figure 5A, with an element in section;
figure 6 shows a sectional view of a particular of the support, which surrounds the tool cone, for supporting an information reading and/or writing device, according to the present invention;
figure 7 shows, in a front view, a particular of a magazine arranged on the machine, in which hooking means are arranged for hooking the tool cone;
figure 8 shows a perspective view of the magazine of figure 7;
figure 9 shows a perspective view of the hooking means, according to figures 7 and 8.

In the various figures similar parts will be indicated with the same numerical references.

### Detailed description

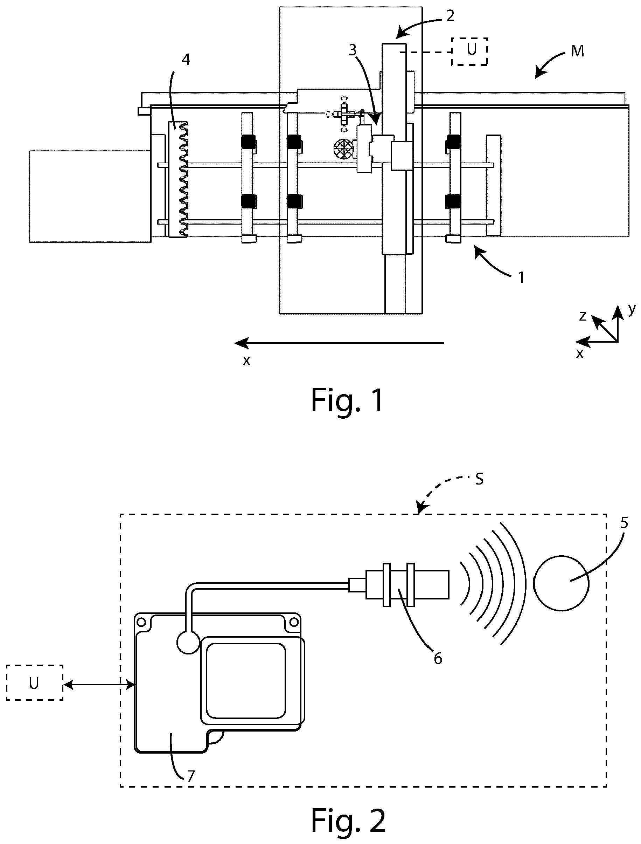

With reference to figure 1, the machine for working workpieces made of wood, plastic, metal, fiberglass, glass, ceramic, and the like, provided with a system for recognizing tools, according to the present invention, wholly indicated with the reference letter M, substantially comprises a logic control unit U, in which at least one predefined working program for the operation of said machine M is stored, a work surface 1, for supporting the workpieces, a mobile carriage 2, which supports at least a working head 3, and at least one magazine 4.

In particular, as it can be seen from figure 1, said work surface 1 has an elongated shape, and develops according to a prevalent direction X, with respect to a Cartesian reference system XYZ between the ends of said machine M.

In the embodiment that is described, said machine M is a numerical controlled machines for working wooden workpieces.

However, in other embodiments, the system for recognizing tool, according to the present invention, can be applied to a different type of machine, with respect to the one described here.

The working head 3 is able to move with respect to said work surface 1 according to the three movement axes, parallel to the axes of the Cartesian reference system XYZ, and is able to rotate around two other rotation axes, thus realizing a movement along five axes.

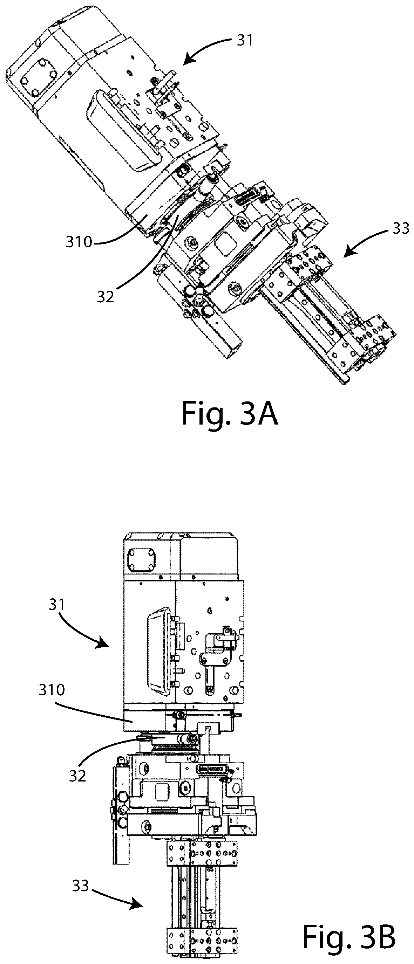

With reference to figures 3A-4C, said working head 3 comprises a spindle 31 and a tool holder 32, coupled with said spindle 31.

Said spindle 31 can be operated by an electric motor (not shown in the figures) and is able to rotate around its own rotation axis.

Said tool holder 32 comprises a central body 320 provided with a first end 321 and with a second end 322, opposite to said first end 321.

In particular, said first end 321 can be coupled with said spindle 31 by means of hooking means (not shown in the figures).

Said second end 322, on the other hand, can be coupled with a tool 33 to perform a respective working of the workpieces.

With particular reference to figure 2, said system for recognizing tools, object of the present invention and wholly indicated with the reference letter S, comprises an identification means 5, a reading and/or writing device 6, and a processing unit 7.

Said system S is an RFID recognition system and allows, therefore, radio frequency communication among said identification means 5, said reading and/or writing device 6, and said processing unit 7.

In the embodiment that is described, said system S is applied to said machine M. However, in other embodiments, said system S can be applied to machines other than said machine M.

As said, the machine M also comprises a logic control unit U, in particular with numerical control, in which one or more working programs of the workpieces are stored.

In the present embodiment, with particular reference to figure 2, said logic control unit U is in communication with said processing unit 7.

However, in other embodiments, said logic control unit U can be directly connected to said reading and/or writing device 6.

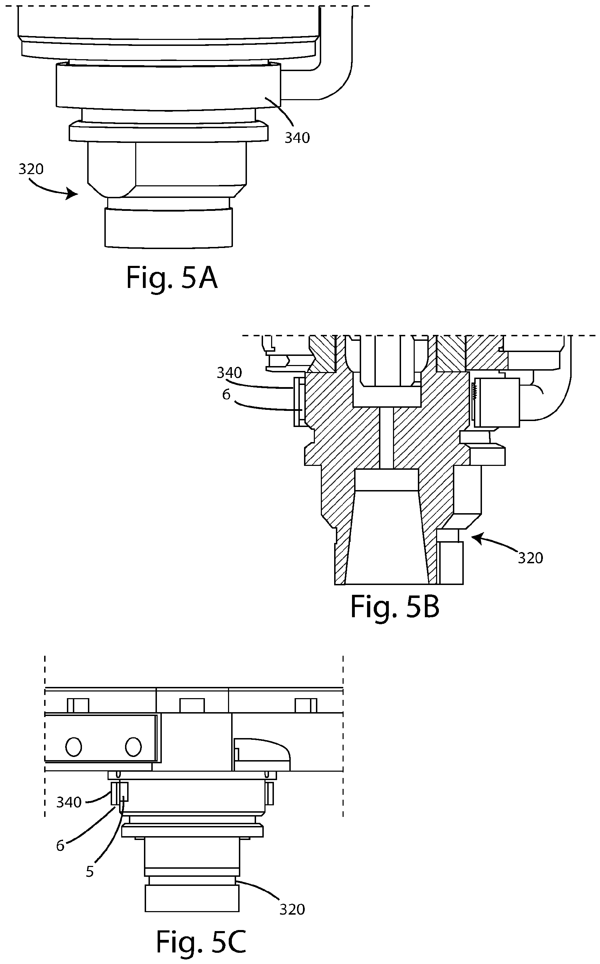

As can be seen from figure 5C, said identification means 5 is arranged on said tool holder 32.

In particular, said identification means 5 is inserted into a hole or a housing, obtained on the surface of said tool holder 32, into which said identification means 5, also called "tag-tablet", is inserted.

Said identification means 5 comprises a plurality of information relating to the tool 33.

More specifically, said identification means 5 is an RFID tag, or a transponder, equipped with a respective antenna and comprising information relating to the tool 33, which have to be coupled with the tool holder 32, to perform a specific working program.

In the present embodiment, such information comprises one or more geometric parameters such as, for example, the diameter and length of said tool 33, and one or more cutting parameters such as, for example, the maximum rotation speed and the maximum advancement speed of said tool 33.

As will be better described in the following, said information allow performing a check, at the moment of the withdrawal of the tool 33, on the fact that said tool 33 is the one suitable for the selected working program.

Such information, then, comprise data that vary over time, such as, for example, the hours worked by the respective tool 33. This allows, for example, to update such information within said identification means 5 when the tool 33 it is repositioned inside the magazine 4.

Such information may also comprise further data and/or parameters.

In an embodiment of the present invention, the first bytes of the memory of said identification means 5, up to a maximum of 32 bytes, are dedicated for the reading and/or writing of information relating to the safety and the monitoring the useful life of the tool 33.

The remaining part of the memory of said identification means 5, on the other hand, is dedicated to all further information.

However, in other embodiments, the use of the bytes included in the memory of said identification means 5 can be different with respect to what has been described.

Furthermore, as will be better described in the following, in the present embodiment a unique identification code or ID TAG is assigned to each tool 33.

Said ID TAG allows to uniquely identify the respective tool 33. Preferably, said ID TAG can be of 12 bytes.

However, in other embodiments, such ID TAG may comprise a different number of bytes other than 12 bytes.

Furthermore, in the embodiment that is described, said RFID tag is a passive RFID tag.

However, in other embodiments of the present invention, said RFID tag can be of any type, such as, for example, an active, semi-active, or semipassive RFID tag.

In addition, the identification means 5 can also be a bar code or a code of any other type, without departing from the scope of protection of the present invention.

In the present embodiment, then, said RFID tag comprises a conventionally defined punctiform type antenna, i.e., an antenna that radiates substantially uniformly throughout the space surrounding it.

Therefore, the identification means 5 of said tool holder 32 is uniquely and permanently associated with the tool 33.

Said association between ID TAG and tool 33 is stored in said logical unit U of said machine M.

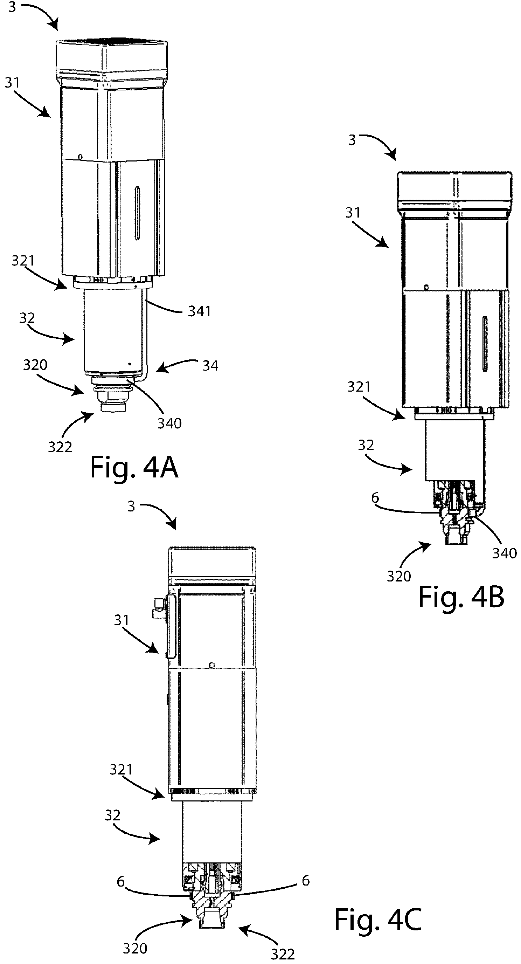

With reference to figures 3A-4C, a reading and/or writing device 6 of said identification means 5 is coupled with said working head 3, by means of a supporting structure 34.

In particular, said reading and/or writing device 6 is integral with said spindle 31.

Said supporting structure 34 comprises a main body 340 and a rod 341 having a first end connected to said main body 34, and a second end, opposite to said first end, connected to said spindle 31.

However, in other embodiments, said rod 341 can also be integrated into a flange 310 of said spindle 31.

As can be seen from figures 5A and 5B, said main body 340 has a substantially circular shape and wraps around said central body 320 of said tool holder 32.

In the embodiment that is described, said main body 340 of said supporting structure 34 surrounds at least one arc of circumference of said central body 320 of said tool holder 32.

Preferably, said supporting structure 34 extends for an angle comprised between 5° and 360°, in particular between 90° and 360°, preferably an angle equal to 180°.

In particular, the angles of 180° and 360° allow a 100% probability that the reading and the writing will correctly take place.

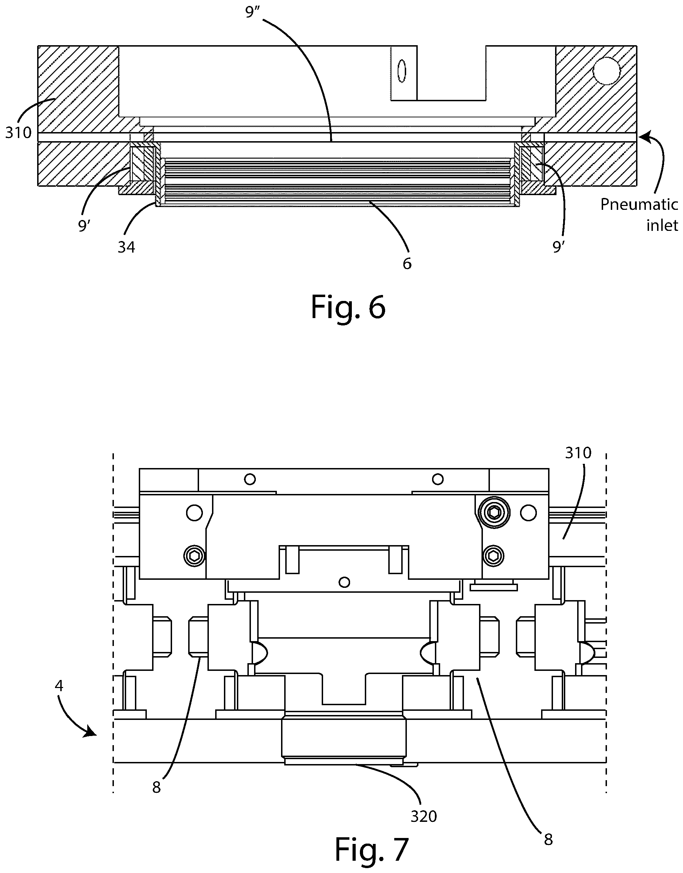

With particular reference to figure 6, in a further embodiment of the present invention, said supporting structure 34, intended to support said reading and/or writing device 6, is integrated in flange 310 (called in the jargon head reference flange).

In particular, said supporting structure 34 is able to move, after a pneumatic actuation, from a first position, in which said supporting structure 34 is retracted with respect to said flange 310, to a second position, different from said first position, in which said supporting structure 34 is extracted with respect to said flange 310, and said reading and/or writing device 6 can carry out the reading and/or writing operations on said identification means 5.

Furthermore, as can be seen from figure 6, first elastic means 9', such as an annular gasket, are arranged respectively between the ends of said supporting structure 35 and said flange 310.

Said annular gasket 9' is capable of inflating by means of air and allows said supporting structure 34 to descend towards the extracted position and is capable of compressing and creating a seal to avoid air from escaping laterally from said supporting structure 34.

Said air enters through the pneumatic inlet duct 9".

As can be seen, in particular, from figures 4B, 4C, and 5B, said reading and/or writing device 6 is arranged on said main body 340 of said supporting structure 34.

More specifically, said reading and/or writing device 6 is an RFID reader, capable of reading and/or writing data or information on said identification means 5.

In particular, said reading and/or writing device 6 comprises a respective antenna capable of sending a radiofrequency signal and if said identification means 5 is in the reception area to receive said radiofrequency signal, establishes bidirectional communication between said identification means 5 and said reading and/or writing device 6.

This arrangement of the antenna of said reading and/or writing device 6 on said main body 340 allows said reading and/or writing device 6 to read and/or write information on said identification means 5, even when said spindle 31 is rotating at high speeds.

Said processing unit 7 is operatively connected to said logic control unit U and to said reading and/or writing device 6 to exchange information relating to said tool 33.

With reference to figures 1, 7, and 8, inside said magazine 4 the tool holders 32 are positioned, to which the respective tools 33, necessary for working the workpieces, are coupled.

In particular, inside said magazine 4 hooking means 8 for hooking each tool holder 32 are installed, to which the respective tool 33 is coupled.

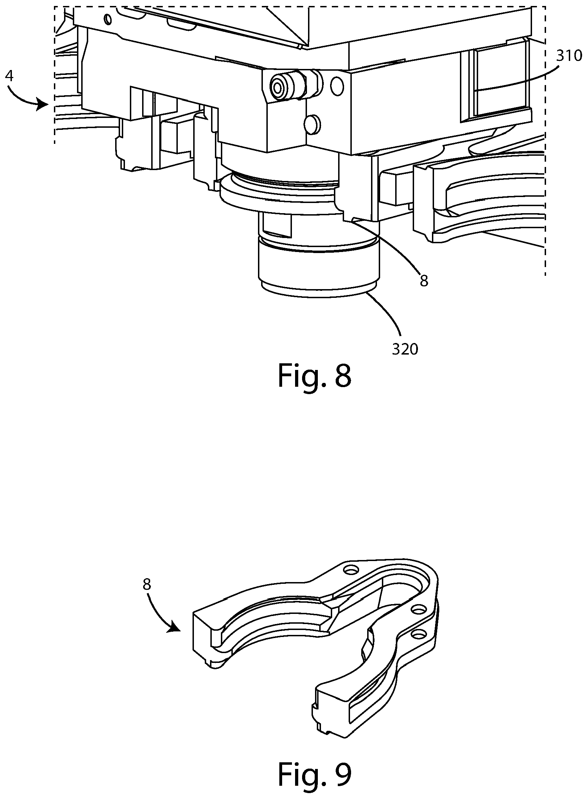

More specifically, said hooking means 8, shown in detail in figure 9, when in use, act on the surface intended to receive said main body 340 of said supporting structure 34, inside which said reading and/or writing device 6 is arranged.

The operation of the machine M described above is as follows.

Initially, when it is necessary to perform a working on a workpiece made of wood, plastic, metal, fiberglass, ceramic, glass, and the like, such workpiece is positioned on said work surface 1, and a work program, stored in the logic control unit U of said machine M, is selected.

Before starting the work program, it is necessary to carry out a mapping step of the different tools housed in the magazine 4, available for working, in order to create a stable association between each tool holder 32 and the respective tool 33 during the whole working and, eventually, also for subsequent working programs.

Such associations between each tool holder 32 and the respective tool 33 are stored inside the logic control unit U of the machine M.

The above-mentioned mapping step is repeated only when modifying the association between the tool holder 32 and the respective tool 33 is necessary and, therefore, to update the information included in the logic control unit U of said machine M.

Subsequently, when the machining begins, said working head 3 is moved towards the magazine 4, in order to couple said tool holder 32 to the tool 33, necessary to execute the previously selected work program.

When said tool 33 is coupled with said tool holder 32, said reading and/or writing device 6 reads the information contained within said identification means 5.

Subsequently, said reading and/or writing device 6 sends the information to said logic control unit U by means of said processing unit 7.

The logic control unit U of said machine M, therefore, performs a comparison between the information received in the mapping step and the information received in said second step.

If the information matches, or if the association between the tool 33 and the respective tool holder 32 is correct, the working starts, otherwise the logic control unit stops the machine M since the tool 33 coupled with said spindle 31 is not suitable for executing the selected work program.

Whenever necessary, said reading and/or writing device 6 writes new or updated information on said identification means 5 at the time of tooling said magazine 4.

### Advantages

As is apparent from the above description, a first advantage of the recognizing system, according to the present invention, is to allow a higher reading and/or writing speed on the RFID tag of the information of the respective tool. In fact, in the embodiment that is described, the RFID tag, being positioned inside the reader antenna beam, allows it to be always available for reading and/or writing.

A further advantage of the recognizing system, according to the present invention, is to allow the reading and/or writing of the RFID tag even during the working of the workpiece, i.e., while the tool is rotating.

In the end, as is apparent, in the machine M object of the present invention, the reading and/or writing operation is masked in the magazine tooling step.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (M) for working workpieces made of wood, plastic, metal, fiberglass, glass and ceramic, comprising:
a logic control unit (U) in which at least one predefined program for working said workpieces is stored,
at least one working head (3) to which a spindle (31) for executing the program for working said workpieces is coupled,
at least one tool holder (32), to which one respective tool (33) for working said workpieces can be coupled, and said at least one tool holder (32) being coupled to said spindle in a removable way (31),
said at least one tool holder (32) being provided with at least one storage and identification mean (5) comprising information relating to said respective tool (33),
said machine (M) being **characterized**
**in that** it comprises a reading and/or writing device (6) of said information comprised in said at least one storage and identification mean (5), arranged coupled to said spindle (31) by means of a supporting structure (34) so as to surround at least partially said tool holder (32), and
**in that** said writing and/or reading device (6) is operationally connected to said logic control unit (U), so as to send said information to said logic control unit (U).

2. Machine (M) according to the preceding claim, **characterized in that** said at least one tool holder (32) comprises a central body (320) provided with a first end (321) which can be coupled to said spindle (31), and a second end (322), opposite to said first end (321), and which can be coupled to said respective tool (33), and
**in that** said supporting structure (34) comprises a main body (340) and a rod (341) having a first end connected to said main body (340) and a second end, opposite to said first end, connected to said spindle (31),
in which said main body (340) has a substantially arc of a circle shape so as to surround at least partially said central body (320) of said at least one tool holder (32).

3. Machine (M) according to any one of the preceding claims, **characterized in that** said supporting structure (34) extends for an angle comprised between 5° and 360°, in particular between 90° and 360°, preferably an angle of 180°.

4. Machine (M) according to any one of the preceding claims, **characterized**
**in that** said at least one storage and identification mean (5) is univocally associated to said respective tool (33), and
**in that** said at least one storage and identification mean (5) is capable of storing
one or more geometric parameters and/or one or more cutting parameters and/or time of use, critical speeds, dimensions, wear, maintenance data of said tool (33),
and/or information such as the correct coupling between tool (33) and tool holder (32),
and/or the correct tool (33) with respect to the selected working program.

5. Machine (M) according to claim 2, **characterized**
**in that** said reading and/or writing device (6) is arranged on said main body (340), of said supporting structure (34), and
**in that** said storage and identification means (5) are arranged on said main body (320) of said at least one tool holder (32) or in said central body (320) of said at least one tool holder (32).

6. Machine (M) according to any one of the preceding claims, **characterized in that** it comprises a processing unit (7), operationally connected to said logic control unit (U) and to said reading and writing device (6), for exchanging said information relating to said tool (33).

7. Machine (M) according to any one of the preceding claims, **characterized**
**in that** said reading and/or writing device (6) is an RFID reader provided with a respective antenna,
**in that** said storage and identification mean (5) is a tag or a RFID transponder provided with a respective antenna of punctiform type.

8. Machine (M) according to claim 1, **characterized**
**in that** said spindle (31) comprises a respective flange (310), and
**in that** said supporting structure (34) is integrated in said flange (310) and it is capable of moving from a first position, in which said supporting structure (34) is retracted with respect to said flange (310), to a second position, different from said first position, in which said supporting structure (34) is extracted with respect to said flange (310).

9. System (S) for recognizing tools, which can be coupled to a machine (M) for working workpieces made of wood, plastic, metal, fiberglass, glass and ceramic of the type comprising a logic control unit (U) in which at least one predetermined program for working said workpieces is stored, at least one working head (3) to which said spindle (31) for executing the program for working said workpieces is coupled, and at least one tool holder (32), to which a respective tool (33) for working said workpieces can be coupled, wherein said at least one tool holder (32) is coupled to said spindle (31),
wherein said system (S) comprises:
at least one storage and identification mean (5) of said respective tool (33) installable on said at least one tool holder (32) and comprising information relating to the respective tool (33),
a reading and/or writing device (6), installable on said spindle (31) and capable of reading and/or writing said information in said at least one storage and identification mean (5), and
a processing unit (7), operationally connected to said logic control unit (U) and to said reading and/or writing device (6), for exchanging information relating to said tool (33),
said system (S) being **characterized**
**in that** said reading and/or writing device (6) of said information comprised in said at least one storage and identification mean (5) is arranged coupled to said spindle (31) by means of a supporting structure (34) so as to at least partially surround said tool holder (32).
